# EUROPEAN PATENT APPLICATION

(11) **EP 4 343 608 A1**
(43) Date of publication of application: **27.03.2024**
(21) Application number: 22197830.7
(22) Date of filing: 26.09.2022
(51) Int. Cl.: G06F 30/15, G06F 30/17, G06F 30/20, G06F 111/10

(54) **METHOD FOR DERIVING A LIBRARY OF VEHICLE DYNAMIC IMPLEMENTATION MODELS**

(71) Applicant: Volvo Autonomous Solutions AB, 405 08 Göteborg (SE)
(72) Inventor: Takkoush, Mohamed, 418 38 Göteborg (SE); Nilsson, Peter, 436 54 Hovås (SE)
(74) Representative: Ström & Gulliksson AB

(57) **Abstract**

A computer-implemented method of deriving a vehicle dynamic library (30) comprising at least two optimized vehicle dynamic implementation models (22a-e) is provided. The method comprises defining (102) at least two operational design domains (24a-e), choosing (104) one vehicle dynamic abstract model (20), choosing (106) one vehicle dynamic implementation model (24) to be optimized, simulating (110) the vehicle dynamic abstract model (20) for each operational design domain (24a-e), wherein the simulation generates reference trajectories (111a, 111b), optimizing (114) the vehicle dynamic implementation model (22) for each operational design domain (24a-e) so as to create at least two optimized vehicle dynamic implementation models (22a-e), wherein each optimization is based on at least one of said generated reference trajectories (111a, 111b), validating (116) each optimized vehicle dynamic implementation model (22a-e) to achieve a validation level for each optimized vehicle dynamic implementation model (22a-e), and saving (118) each optimized vehicle dynamic model (22a-e) together with its validation level.

## Description

### TECHNICAL FIELD

The disclosure relates generally to optimizing vehicle models that could be used in autonomous vehicles. In particular aspects, the disclosure relates to a computer-implemented method of deriving a library of vehicle dynamic implementation models. The disclosure can be applied in partly or fully autonomous heavy-duty vehicles, such as trucks, buses, and construction equipment. Although the disclosure may be described with respect to a particular vehicle, the disclosure is not restricted to any particular vehicle.

### BACKGROUND

In the recent years, the development of fully and partly autonomous vehicle has increased rapidly. A fully or partly autonomous vehicle is controlled, at least in part, by onboard and remote servers. Autonomous vehicles often rely on a combination of inputs from onboard sensors, vehicle control computing resources, communications between vehicles, and from remote servers engaged in, for example, scheduling of vehicle traffic and alerting autonomous vehicles of conditions that cannot be sensed or communicated locally.

There is thus a need for accurate vehicle dynamic models that ensure safe and efficient vehicle motion management of a vehicle, while at the same time being computational easy and fast.

### SUMMARY

According to a first aspect of the disclosure, a computer-implemented method of deriving a vehicle dynamic library comprising at least two optimized vehicle dynamic implementation models , wherein each optimized vehicle dynamic implementation model is correlated to different operational design domains. The method comprises defining at least two operational design domains, choosing one vehicle dynamic abstract model, choosing one vehicle dynamic implementation model to be optimized, parameterizing the implementation model by using at least one geometric parameter from the vehicle dynamic abstract model, simulating the vehicle dynamic abstract model for each operational design domain, wherein the simulation generates reference trajectories, optimizing the vehicle dynamic implementation model for each operational design domain so as to create at least two optimized vehicle dynamic implementation models, wherein each optimization is based on at least one of said generated reference trajectories, validating each optimized vehicle dynamic implementation model to achieve a validation level for each optimized vehicle dynamic implementation model; and saving each optimized vehicle dynamic model together with its validation level. The first aspect of the disclosure may seek to solve the problem of having too computational heavy models. A technical benefit may include to achieve reliable vehicle dynamic models for different use-cases and at the same time providing models that are less computational heavy and quicker than conventional models. On-board controllers and processors often rely on a model of the system to control the vehicle. Such a model needs to be computationally efficient to allow the algorithms to run at a speed faster than real time, while at the same time achieving a high-performance capability. This is achieved by the first aspect of the disclosure.

Another technical benefit may relate to regression testing. The codes and algorithms developed for vehicles should be constantly running through regression testing that ensures that any additional or change does not break previous functionality and does the intended change in the performance of the algorithm. Both those points do not require the most accurate models, but good enough to make sure the introduced changes do what they are designed to do. For that, simplified models such as the optimized implementation models (that are valid in a specific operational design domain) can be used to run those regression tests quickly. Furthermore, because those tests are usually short tests and straight to the point, it is easy to classify in which operational design domain the tests are run, and hence appoint an optimized implementation models to that specific regression test.

In some example, the at least two operational design domains are related to different use cases of the vehicle. A technical benefit may include the ability to dynamically model different use cases of the vehicle. Being able to choose the correct model for the correct use case increases the computational load as an abstract model covering all possible uses cases need not be used.

In some examples, at least two operational design domains are related to any one of: vehicle speed levels, steering angles, environmental parameters, weight of the vehicle and/or a combination of one or more. Different use cases may affect the vehicle in different way, and it may thus be beneficial to cover different scenarios.

In some examples, the simulation is performed with different values of at least one input variable. In some examples, the at least one input variable is related to a steering angle of the vehicle, the speed of the vehicle, vertical road displacement and/or vertical forces on the tire of the vehicle. As with different use-case, different input variables may affect the dynamics of the vehicle. It may thus be beneficial to comprise such parameters into the model to increase the accuracy.

In some examples, the at least one geometric parameter relates to one or more of wheel-bases, track widths, body mass of one or more parts of the vehicle, inertia of one or more parts of the vehicle, the centre of gravity of one or more parts of the vehicle, and coupling positions. The geometric parameters of the vehicle may affect the dynamics of the vehicle. It may thus be beneficial to comprise such parameters into the model to increase the accuracy.

In some examples, the validation is a dynamic model validation process. A technical benefit may include gaining information regarding the accuracy of the model for the specific use-case.

In some examples, the validation is performed by using at least one of said generated reference trajectories.

In some examples, the optimization further is based on defining an objective function that is at least based on the reference trajectories.

In some examples, the objective function further is based on implementation model trajectories originating from the implementation model.

In some examples, the optimization is gradient based.

According to a second aspect, a computer system comprising a processor device is provided. The processor device is configured to perform the method according to the first aspect.

According to a third aspect, a computer program product comprising program code is provided. The program code for performing, when executed by the processor device, the method according to the first aspect.

According to a fourth aspect, a control system comprising one or more control units is provided. The one or more control units are configured to perform the method according to the first aspect.

According to a fifth aspect, a non-transitory computer-readable storage medium is provided. The non-transitory computer-readable storage medium comprises instructions, which when executed by the processor device, cause the processor device to perform the method of the first aspect.

According to yet one aspect, a computer-implemented method of deriving a vehicle dynamic library comprising at least two optimized vehicle dynamic implementation models is provided. Each optimized vehicle dynamic implementation model is correlated to different operational design domains. The method comprises defining at least two operational design domains, receiving test data of the vehicle, where the test data represents reality in the at least two operational design domains, choosing one vehicle dynamic implementation model to be optimized, parameterizing the implementation model by using at least one geometric parameter from the vehicle dynamic abstract model, simulating the vehicle dynamic abstract model for each operational design domain, wherein the simulation generates reference trajectories, optimizing the vehicle dynamic implementation model for each operational design domain so as to create at least two optimized vehicle dynamic implementation models, wherein each optimization is based on at least one of said generated reference trajectories and/or based on test data, validating each optimized vehicle dynamic implementation model to achieve a validation level for each optimized vehicle dynamic implementation model; and saving each optimized vehicle dynamic model together with its validation level.

The above aspects, accompanying claims, and/or examples disclosed herein above and later below may be suitably combined with each other as would be apparent to anyone of ordinary skill in the art.

Additional features and advantages are disclosed in the following description, claims, and drawings, and in part will be readily apparent therefrom to those skilled in the art or recognized by practicing the disclosure as described herein. There are also disclosed herein control units, computer readable media, and computer program products associated with the above discussed technical benefits.

### BRIEF DESCRIPTION OF THE DRAWINGS

With reference to the appended drawings, below follows a more detailed description of aspects of the disclosure cited as examples.
**FIG. 1** is an exemplary view of a heavy-duty vehicle according to one example.
**FIG. 2** illustrates an example of an arrangement in a heavy-duty vehicle according to one example.
**FIG. 3** illustrates an example of an arrangement in a heavy-duty vehicle according to one example.
**FIG. 4** illustrates an example of an arrangement in a heavy-duty vehicle according to one example.
**FIG. 5** schematically illustrates a method according to one example.
**FIG. 6** schematically illustrates a method according to one example.
**FIG. 7** is another view of **FIG. 6** according to another example.
**FIG. 8** is a schematic diagram of an exemplary computer system for implementing examples disclosed herein, according to one example.

### DETAILED DESCRIPTION

Aspects set forth below represent the necessary information to enable those skilled in the art to practice the disclosure.

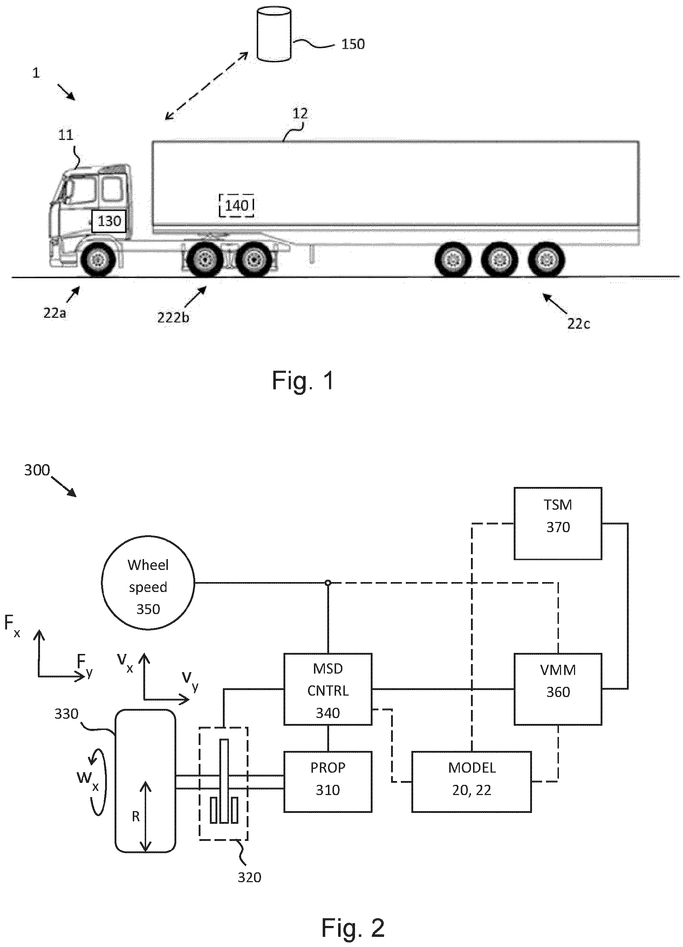

**FIG. 1** illustrates a heavy-duty vehicle **1.** This particular example comprises a tractor unit **110** which is arranged to tow a trailer unit **12.** The tractor **11** comprises a vehicle control unit (VCU) **130** arranged to control various functions of the vehicle **1.** For instance, the VCU may be arranged to perform a vehicle motion management (VMM) function comprising control of wheel slip, vehicle unit stability, and so on. The trailer unit **12** optionally also comprises a VCU **140,** which then controls one or more functions on the trailer **12.** The VCU or VCUs may be communicatively coupled, e.g., via wireless link, to a remote server **150.** This remote server may be arranged to perform various configurations of the ECU, and to provide various forms of data to the ECU **130,** such as for example providing data regarding the make and type of tyres mounted on the vehicle **1.**

The vehicle combination **1** may of course also comprise additional vehicle units, such as one or more dolly units and more than one trailer unit.

The vehicle 1 is supported by wheels **22,** where each wheel comprises a tyre. The tractor unit **11** has front wheels **22a** which are normally steered, and rear wheels **22b** of which at least one pair are driven wheels. Generally, the rear wheels of the tractor **11** may be mounted on tag or pusher axles. A tag axle is where the rear-most drive axle is non-powered, also referred to as a free-rolling or dead axle. A pusher axle is where the forward-most drive axle is not powered. The trailer unit **12** is supported on trailer wheels **22c.** Trailers with driven wheels, and even a steered axle, are also possible.

One of the rear axles and/or one of the axles on the trailer **12** may be a liftable axle. A lift axle, also known as a retractable axle, is an axle which can be raised so that its tyres are not touching the road surface. This improves fuel economy and reduces maintenance and tyre wear. It may also reduce or increase dynamic stability features of the vehicle and it can increase or decrease road wear depending on vehicle load, which axles that are lifted and in which driving situation the axle is lifted. One or more of the wheels may also be mounted with an active suspension which may be controlled by the VCU **130, 140,** e.g., in order to adjust a normal force of one or more tyres.

**FIG. 2** schematically illustrates functionality **300** for controlling a wheel **330** by some example MSDs here comprising a friction brake **320** (such as a disc brake or a drum brake) and a propulsion device **310** (such as an electric machine or a combustion engine). The friction brake **320** and the propulsion device **310** are examples of wheel torque generating devices, which may also be referred to as actuators and which can be controlled by one or more motion support device control units **340.** The control is based on, e.g., measurement data obtained from a wheel rotation speed sensor **350** and from other vehicle state sensors, such as radar sensors, lidar sensors, and also vision based sensors such as camera sensors and infra-red detectors. Other example torque generating motion support devices which may be controlled according to the principles discussed herein comprise engine retarders and power steering devices. An MSD control unit **340** may be arranged to control one or more actuators. For instance, it is not uncommon that an MSD control unit is arranged to control MSDs for both wheels of an axle. By estimating vehicle unit motion using, e.g., global positioning systems, vision-based sensors, wheel rotation speed sensors, radar sensors and/or lidar sensors, and translating this vehicle unit motion into a local coordinate system of a given wheel (in terms of, e.g., longitudinal and lateral velocity components), it becomes possible to accurately estimate wheel slip in real time by comparing the vehicle unit motion in the wheel reference coordinate system to data obtained from a wheel rotation speed sensor **350** arranged in connection to the wheel.

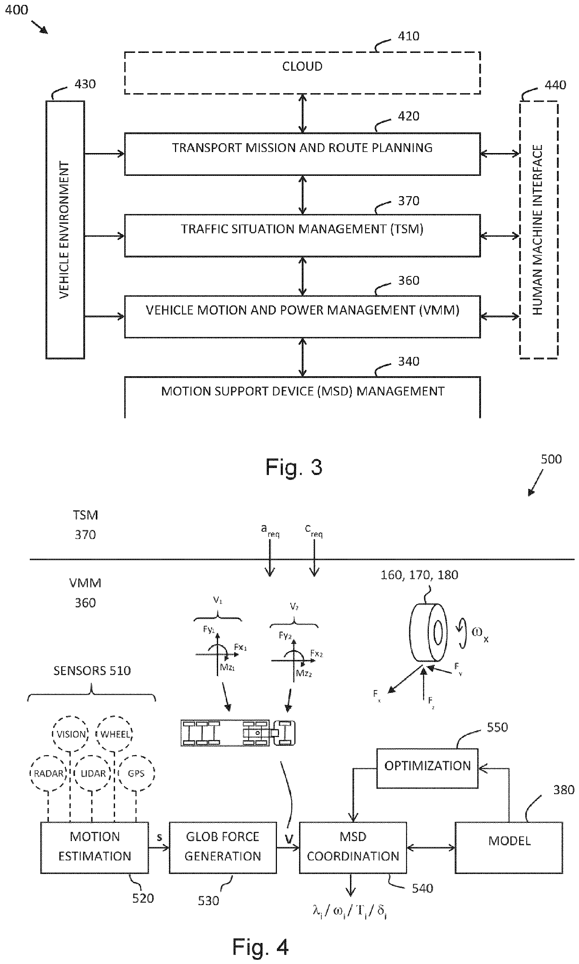

With reference also to **FIG. 3** and **FIG. 4****,** a traffic situation management (TSM) function **370** plans driving operations with a time horizon of, e.g., 1-10 seconds or so. This time frame corresponds to, e.g., the time it takes for the vehicle 1 to negotiate a curve. The vehicle maneuvers, planned and executed by the TSM, can be associated with acceleration profiles and curvature profiles which describe a desired vehicle velocity and turning for a given maneuver. The TSM continuously requests the desired acceleration profiles areq and curvature profiles creq from the VMM function **360** which performs force allocation to meet the requests from the TSM in a safe and robust manner. The TSM function **370** may also base the determination of vehicle maneuver on the model **380,** as indicated in **FIG. 2****.** For instance, the TSM function **370** may compare two or more different maneuvers which accomplish the same objective in terms of, e.g., tyre wear and/or rolling resistance, and then select the one which is most favorable in these respects.

Desired acceleration profiles and curvature profiles may optionally be determined based on input from a driver via a human machine interface **440** of the heavy-duty vehicle via normal control input devices such as a steering wheel, accelerator pedal and brake pedal, although the techniques disclosed herein are just as applicable with autonomous or semi-autonomous vehicles. The exact methods used for determining the acceleration profiles and curvature profiles is not within scope of the present disclosure and will therefore not be discussed in more detail herein. Notably, the traffic situation management and/or the transport mission and route planning function **420** may configure various properties of the vehicle, such as raising and lowering a liftable axle, adjusting suspensions, and so on.

Sensors arranged to provide data about the vehicle environment **430** provides input to the overall control stack **400,** and a connection to remote processing resources, such as cloud-based processing resources **410** are also optionally comprised in the control stack. The remote server **150** in **FIG. 1** may be comprised in this type of cloud layer **410.**

The VMM function **360** operates with a time horizon of about 0,1-1,5 seconds or so, and continuously transforms the acceleration profiles a_{req} and curvature profiles c_{req} into control commands for controlling vehicle motion functions, actuated by the different MSDs of the vehicle 1 which report back capabilities to the VMM, which in turn are used as constraints in the vehicle control. The accuracy of this control is improved by means of the vehicle dynamic models **20, 24** discussed herein.

With reference mainly to **FIG. 4****,** the VMM function **360** performs vehicle state or motion estimation **520,** i.e., the VMM function **360** continuously determines a vehicle state **s** (often a vector variable) comprising positions, speeds, accelerations, yaw motions, normal forces and articulation angles of the different units in the vehicle combination by monitoring vehicle state and behavior using various sensors **510** arranged on the vehicle **1,** often but not always in connection to the MSDs.

The result of the motion estimation **520,** i.e., the estimated vehicle state **s,** is input to a global force generation module **530** which determines the required global forces on the vehicle units which need to be generated in order to meet the motion requests from the TSM **370.** An MSD coordination function **540** allocates, e.g., wheel forces and coordinates other MSDs such as steering and suspension. The coordinated MSDs then together provide the desired lateral **Fy** and longitudinal **Fx** forces on the vehicle units, as well as the required moments **Mz,** to obtain the desired motion by the vehicle combination **1.** As indicated in **FIG. 4****,** the MSD coordination function **540** may output any of wheel slips λᵢ, wheel rotation speeds **ω**, torques **Tᵢ** and/or steering angles **δ_{I}** to the different MSDs.

The MSD coordination function **540** is supported by a model function which may continuously update software-based models **20, 24** of the vehicle. The MSD coordination function may decide on a number of different control options and/or different MSD coordination solutions which all meet a current request from the TSM **370,** and thereby also improve some secondary objective, like for example reducing a tyre wear rate and/or improving energy efficiency of the transportation mission by reducing a rolling resistance. This selection and/or optimization can be performed by an optimization module **550.** In other words, it is appreciated that there are often additional degrees of freedom available when performing the MSD coordination, meaning that a given set of global forces can often be obtained in many different ways.

As previously mentioned, accurate abstract vehicle dynamic models are very computational heavy and often requires specialized computers to perform the simulations. There is thus a need to develop vehicle dynamic models that have a short computational time and that could be performed on online controllers.

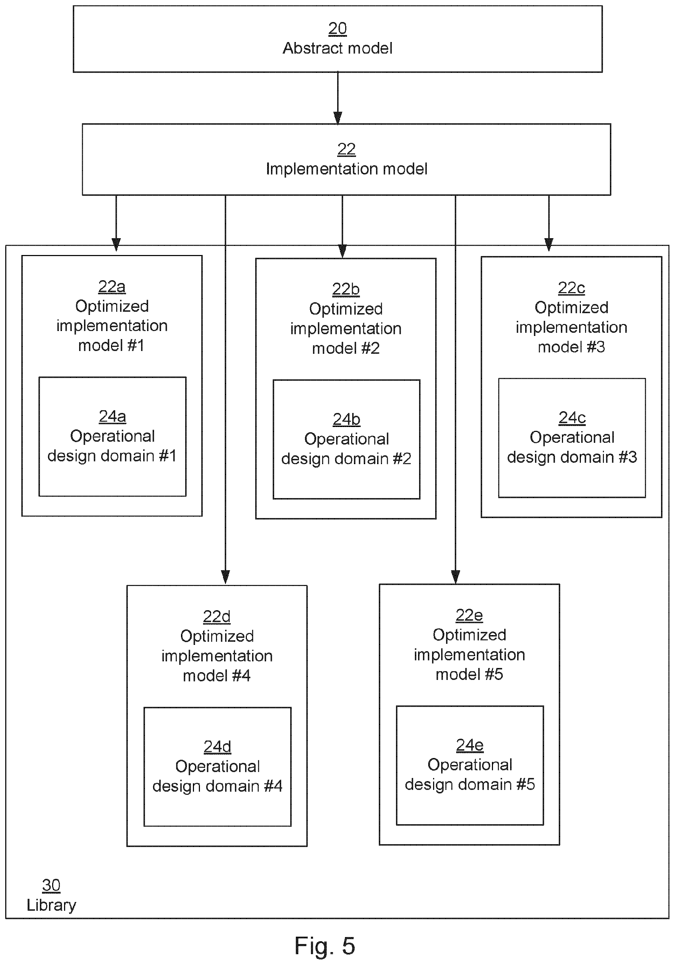

The present inventors have thus developed a method that can optimize an abstract model **20** to match the performance of a more simplified implementation model **24** for a specific use case. The aim is to create a vehicle dynamic library **30** of optimized implementation models **24a-e** that each correlate to one use-case or operational design domain. This is schematically illustrated in **FIG. 5****.**

In **Fig. 5****,** it can be seen that an abstract model **20** is used to create a plurality of optimized implementation models **22a-e** for a respective operational design domain **24a-e.** The abstract model **20** can be seen to represent reality in the defined operational design domains **24a-e**. In a preferred embodiment, the abstract model **20** represents reality in a plurality of operational design domains **24a-e.** In one example, the abstract model **20** represents reality in all defined operational design domains **24a-e.** The abstract model can also be referred to as a high-fidelity model. A high-fidelity model closely matches the operational context of interest, and is thus a very detailed and complex model.

The design domains **24a-e** should be seen as use-cases of the vehicle **1.** The operational design domain **24a-e** defines the domain, scenario and/or context in which a vehicle is operating or a model is simulated. In one aspect, the different operational design domains may be grouped based on vehicle speed levels. For example, vehicle speed range between 0-5 m/s may be a first operational design domain **24a,** vehicle speed range between 5-10 m/s may be a second operational design domain **24b,** vehicle speed range between 10-15 m/s may be a third operational design domain **24c,** etc..

In another aspects, the different operational design domains **24a-e** may be grouped based on other use cases of the vehicle, for example steering angle, road condition, weather, traffic, surrounding objects, and position and time aspects. The operational design domain **24a-e** may be environmental parameters, such as external parameters that cannot be influenced (such as road condition, weather, traffic, surrounding objects, etc.).

In other aspects, the different operational design domains **24a-e** may be grouped based on different ranges of steering angle. Yet further, an operational design domain **24a-e** may be grouped based on the combination of steering angle and vehicle speed. This may for example be beneficial when considering lateral dynamics which often are highly non-linear. Hence, approximating such features with simple linear models will only ensure good performance at the linearization point. A suitable operational design domain may thus be a combination of steering angle and speed.

In yet other aspects, the different operational design domains **24a-e** may be grouped based on different road profiles. The road profile may comprise bumps, hills, banking, etc. For example, a first road profile, for example bumps, may be a first operational design domain, a second road profile, for example hills, may be a second operational design domain, etc.. This may for example be beneficial when considering vertical dynamics (suspension), as different road profiles affects the vehicle differently.

Yet further, the different operational design domains **24a-e** may be grouped based on high frequency road characteristics. This could be seen as the smoothness or roughness of roads like on highways, where higher frequency noise from the road excites the suspension in different ways than just driving slowly in the city.

In yet another example, the different operational design domains **24a-e** may be grouped based on the material of the road. This could be grouped as asphalt, gravel, sand, mud or snow. For example, a first road material, for example asphalt, may be a first operational design domain, a second road material, for example gravel, may be a second operational design domain, a third road material, for example sand, may be a third operational design domain, etc.. The road material affects the vehicle dynamics, especially when looking at tire models and slip.

In a further example, the different operational design domains **24a-e** may be based on the weather, such as for example, rain, sun, fog, snow, etc. Sensors in vehicles (for example cameras) will have different performance when there is a lot of rain or dust compared to a clear day. Hence weather conditions create different ODDs. The operational design domain may also be grouped based on attention levels used for the autonomous driver, or human driver.

In yet one example, the different operational design domains **24a-e** relate to the weight of the vehicle 1. One operational design domain **24a-e** may be grouped as when the truck is loaded, and another operational design domain may be when the truck is unloaded. Hence the operational design domains may be grouped based on different loading conditions.

It should be noted that operational design domains **24a-e** is not the same as a drivability index (such as for example fuel consumption), as the drivability index have different values in different operational design domains **24a-e** for the same vehicle or model. Even though the steering angle might be determined by the driver (as is the speed of the vehicle), different steering angle ranges excite the vehicle in different ways. There is thus different dynamics to consider. The variance in dynamics cannot easily be captured by one simplified model, hence different operational design domains are defined for the different range of dynamics. In terms of air resistance, one can consider wind to be a factor that defines the different operational design domains. The type of vehicle can also define the different operational design domains. That is, whether driving/simulating a truck or a sports car there are different dynamics, hence being different operational design domains **24a-e.**

It should be noted that an operational design domain **24a-e** may comprise a plurality of the features as been described above. As an example, a first operational design domain **24a** may cover muddy road in a rainy condition, a second operational design domain **24b** may cover a snowy road in sunlight, a third operational design domain **24c** may cover a gravel road in a cloudy weather, etc. Yet further, in one example a first operational design domain **24a** may cover muddy road in a rainy condition where the vehicle **1** is fully loaded, and a second operational design domain **24b** may cover muddy road in a rainy condition where the vehicle **1** is un-loaded.

In **FIG 5****,** five different operational design domains **24a-e** are present. However, it should be noted that any number of operational design domains are possible. In one example, six operational design domains are defined. The more operational design domains that are used, the bigger the library **30** of optimized vehicle dynamic implementation models **24a-e** will be. In order to create a library **30,** it is beneficial if at least two operational design domains **24a-e** are present.

An implementation model **22** is optimized for each operational design domain **24a-e,** thus creating a plurality of implementation models **22a-e**. The implementation model **22** can also be referred to as a low-fidelity model. A low-fidelity model is a simplified model, compared to the high-fidelity model, that might deviate from the real-world system in some use-cases. The implementation model **22** is thus less computational consuming than the abstract model as it is only focusing on one specific implementation model **22a-e**.

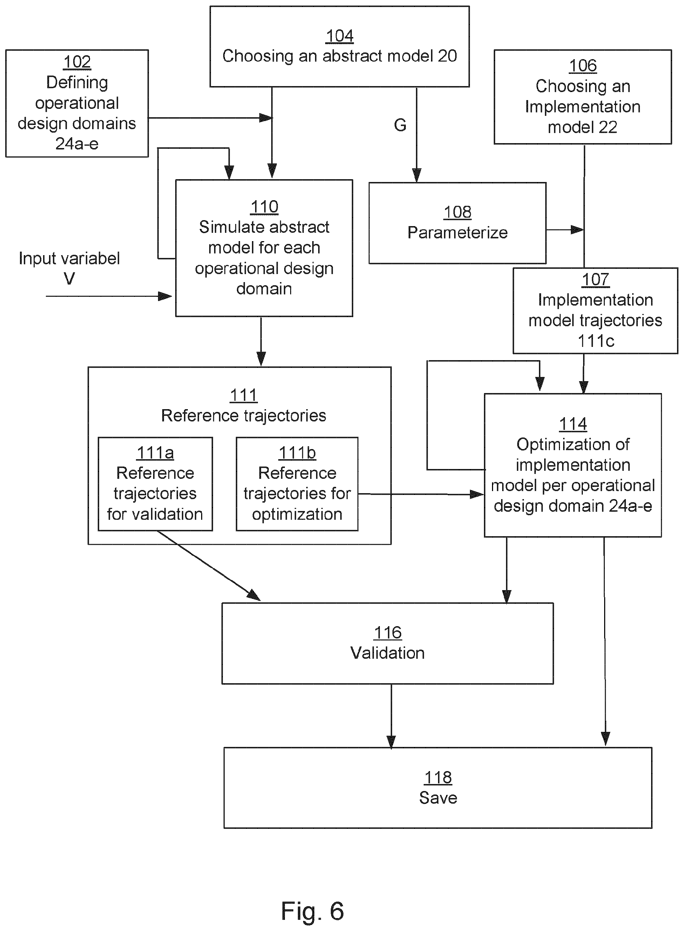

The process of optimizing the implementation models **22a-e** will now be described more in detail with reference to **FIG. 6****.** One example of such method is illustrated in **FIG. 6** where a method of deriving a vehicle dynamic library **30** comprising at least two optimized vehicle dynamic implementation models **22a-e.** Each optimized model **22-e** is correlated to different operational design domains **24a-e** is provided.

The method comprises defining **102** at least two different operational design domains **24a-e**, as described with reference to **FIG. 5****.**

The method further comprises choosing, or defining, an abstract model. The abstract model could be created in a suitable modelling language that is capable of modelling complex systems. In one example, the abstract model is made by an object-oriented, declarative, multi-domain modelling language. Such a language may for example be Modelica. More specifically, the language may be Modelica used for A-causal physical modelling. The aim of the abstract model is to model physical component as much as possible, as laws of physics already are validated and true. However, the level of details of the model have to be based on an engineering judgement. In some instances, an increased level of details in the model will not provide any additional details and instead only increase the computational cost. As an example, the transmission gears can be modeled in a way that equate torques and speeds of gears using gear ratios. For a dynamics vehicle model, it does not add any additional value to have a finite element model of each tooth on the gear. The abstract model is preferably designed to capture all the possible dynamics of the actual vehicle **1.**

In one aspect, the abstract model is replaced by test data of the vehicle. In this example, test data is used to represent reality. Hence, if test data is used, the abstract model will not be simulated, instead test data is collected for each relevant operational design domain **24a-e**. The test data could be used as input when optimizing the implementation models **22a-e.**

The method further comprises choosing **106** an implementation model **22** to be optimized. The implementation model **22** may be chosen from an existing library. Alternatively, the implementation model **22** is manually, by an engineer, designed to capture as many operational design domains **24a-e** as possible or to capture a plurality of defined operational design domains **24a-e**. Any type of existing library could be used, for example OpenPBS as is known to the person skilled in the art. The implementation model **22** could be created in a suitable modelling language that is capable of modelling complex systems. In one example, the implementation model is made by an object-oriented, declarative, multi-domain modelling language. Such a language may for example be Modelica. More specifically, the language may be Modelica used for A-causal physical modelling.

The implementation model **22** may be a single track model. The single track model may be linear or nonlinear. A single track model may be suitable when considering lateral dynamics. However, the type of model may differ depending on the defined operational design domains **24a-e**. For in operational designs where vertical dynamics are of importance, other models are preferably used. Such model may for example be quarter car (i.e. a wheel with suspension and a suspended mass on top which weighs ¼ of the mass of the vehicle. ¼ considering a passenger car with 4 wheels).

The implementation model **22** to be optimized preferably has at least one fixed parameter. The fixed parameter may be related to velocity. The parameter may be constant, i.e. having a fixed value. Hence, the velocity parameter may be constant, such that it runs with a constant speed. Further assumptions or simplifications may be made in the implementation model. For example, one or more of the following simplifications can be made: the velocity of the vehicle's center of gravity is considered to be constant along the longitude of its trajectory, all lifting, rolling and pitching motion will be neglected, the vehicle's mass is assumed to be concentrated at the center of gravity, the front and the rear tires will be represented as one single tire on each axle where the imaginary tire contact points which the tire forces are to act upon lie along the center of the axle, the pneumatic trail and the aligning torque resulting from the slip angle of the tire will be neglected, the wheel-load distribution between front and rear axle is assumed to be constant, the longitudinal forces on the tires, resulting from the assumption of a constant longitudinal velocity, will be neglected. However, these simplifications are merely some examples of assumptions that could be made.

The method may further comprise using at least one geometric parameter **G** from the abstract model **20** to parameterize the implementation model **22.** In other words, the method comprises parameterizing at least one geometric parameter **G** of the implementation model **22** based on the abstract model **20.** The at least one geometric parameter **G** relates to one or more of; wheel-bases of the vehicle **1,** track widths, body mass of one or more parts of the vehicle, inertia of one or more parts of the vehicle, centre of gravity of one or more parts of the vehicle and coupling positions on the vehicle. Coupling positions are especially interesting to analyse when dealing with combination vehicles.

The method may further comprise simulating **110** the abstract model **20** for each operational design domain **24a-e,** wherein the simulation is performed with different values of at least one input variable **V.** The at least one input variable **V** may for example be related to a steering angle of the vehicle. The at least one input variable **V** may further be related to the speed of the vehicle, this is especially true if the speed is not considers as being constant. In one example the simulations is performed with different values of at least two input variables **V,** where one input variables **V** is related to the steering angle of the vehicle and where one input variable Vis related to the speed of the vehicle. The input variable **V** depend on the operational design domain **24a-e**. If a quarter car model is used, variables **V** relating to vertical road displacement and/or vertical forces on the tire may for example be of interest.

The simulation may be a step steer response. In other examples, the simulation is based on frequency analysis, and the simulation may then for example be a sweep of different frequencies. The simulation process generates different traces which are herein referred to as reference trajectories used for optimization **111b** and/or reference trajectories used for validation **111a**. The reference trajectories used for optimization **111b** are then used in the optimization step. The reference trajectories used for validation **111a** are used in the validation step. The reference trajectories used for optimization **111b** may be the same, or may be different, than the reference trajectories used for validation **111a** are used in the validation step. In other words, simulating the abstract model **20** for each operational design domain **24a-e** generates reference trajectories. The reference trajectories may be a dynamic signal, such as for example relating to lateral accelerations and/or yaw rates.

The implementation model **22a-e** may receive test data to further enhance the implementation model **22a**-**e**. Such test data may for example relate to steering angles.

In some aspects, at least one output of the simulation is used as input information when optimizing the implantation model **22a-e.** An example would be when a driver model is used to simulate an abstract model **20** following a certain trajectory. The steering signal, which could be a state (or also an output) in the abstract model **20** can be used as an input to the implementation model **22a-e.** Another example could be considering variable loading. One can take the value of the load from the abstract model **20** and use it to change the mass on the implementation model, making this signal become an input to the implementation model **22.**

The reference trajectories **111b** originating from the simulation of the abstract model **20** may be used as input information when optimizing the implementation model. The method further comprises optimizing at least one implementation model for each operational design domain **24a-e**. The optimization process is preferably a gradient based optimization.

The optimization process may be performed in different frameworks. In one example, the optimization process is performed by CasADi framework. The optimization process is preferably used using automatic differentiation for calculating the Jacobians and Hessians of the model. As is known to the person skilled in the art, the Jacobian is a matrix of gradients for components of a vector field and Hessian is a matrix of second order mixed partials of a scalar field that describes the local curvature of a function of many variables. The equations that defines the model could be defined by Differential Algebraic Equations (DAEs). However, it should be noted that other optimization processes could be used. Gradient optimization can lead to better and faster results compared to gradient free optimization. However, this comes at the cost of knowing the equations of the model. In this case, the equations are known (for example by using automatic differentiation) as the details of the models are known and it is thus beneficial to use gradient-based optimizations.

Optimizing one implementation model for each operational design domain **24a-e** may be done by using the at least one input parameter (such as for example steering angle) from the abstract model **20** simulation to initiate a first simulation of the implementation model to create reference trajectories **111a, b** originating from the implementation model. This first simulation, and thus the generated reference trajectories **111c,** may be used as an initial guess for the optimization. Additionally, the first simulation may be used as a scaling factor during the optimization process.

The method further comprises creating an optimization problem definition by determine which parameters that are to be optimized, and define constraints of the model. The parameters that are to be optimized may be arranged with a flag, that informs the optimization algorithm that this parameter can be changed during optimization. In one example, the cornering coefficient of the axles are set as optimization variables. In order to achieve a good optimization process, one need to understand that the simplification made in the model as certain parameters do not retain their physical meaning. For example, lumping two sides of the axle into one wheel as is done in a single track model, as well as neglecting roll dynamics and other tire and suspension modelling, means that the tire parameters might not actually be correct and is thus need of optimization. Furthermore, the simplification of a tire model removes a lot of physical meaning of the tire. In order to compensate for all of that, the tire characteristics (i.e. the cornering coefficients) may be changed, as they are no longer physically sound, in order to match the performance of the model.

Single track models (especially with a linear tire model) are very simplified compared to the abstract model **20.** Such a simplification may make the model not very physically sound, meaning that certain parameters can be better estimated (or optimized) so as to retain the performance of the implementation model in comparison to abstract model **20.** In vehicle modelling, the contact between the vehicle and the road is the contact patch of the tires. This means that this contact point/patch may be important as it defines how the forces are transferred between the vehicle and the ground. These forces can be seen as the forces that moves a vehicle forward, sideways and upwards. This is one of the reasons that the cornering coefficients may be optimized, as they are related to tire characteristics, and specifically define how much lateral force there is in the tires.

The method may further comprise transferring the optimization problem into the optimization framework. This is especially true if the optimization problem is defined in different frameworks having the same or similar language. For example, the optimization problem could be defined using "Optimica" language which is built on top of the"Modelica" language. The frameworks thus uses the same syntax. In optimica, there is a class called optimization, which is the class that defines the optimization problem. The optimization problem is later transferred into the CasADi framework in order to use automatic differentiation to calculate the jacobains and hessians of the system.

The method may further comprises defining an objective function. The objective function is the function that needs to be optimized. The objective function preferably comprises a collection of decision variables. The solution to the optimization problem is then the set of values of the decision variables for which the objective function reaches its optimal value. In one example the objective function is based on the reference trajectories **111a, 111b** and the implementation model trajectories **107.** The objective function may be the integral of the squared difference between the reference trajectories **111a, 111b** and the corresponding implementation model trajectories **107.**

The method may further comprise choosing decision variables, such as lateral accelerations and yaw rates. The reference trajectories **111a, 111b,** that were obtained from the abstract model **20,** are used in the optimization. The equivalent trajectories **107** from the implementation model (i.e. the trajectories of lateral accelerations and yaw rates) may also be used in the optimization problem. In one example, the aim is to minimize the difference between the two trajectories. Hence, the reference trajectories **111a, 111b** are the ones obtained from the abstract model **20.** The implementation model trajectories are being created during the optimization problem. Each step of the optimization problem will generate a different trajectory, and the difference between that and the reference trajectory is used in the objective function which is trying to be minimized to 0.

The method may further comprise the step of adding penalties to the parameters used in the objective function. The penalties may be quadratic. This is done to emphasise the parameters during the optimization.

Once the difference between the trajectories (or the error between the models) are established, a weight is given to those values to be able to calculate the objective function. The weights given may depend on the magnitude of the variable being monitored. It may further depend on the importance of the variable to the context of our optimization. This could be based on engineering judgment.

The method may further comprise setting at least one input variable as the eliminated variable from the optimization. In other words, this parameter will not be changed during the optimization. In one example the input variable is the steering angle of the vehicle. The setting of eliminated variable also is related to the specific tool and the language being used. The inputs to the system are not optimized. The reasons for this is that the aim is to optimizing parameters of the model and not the input of the model.

The method may further comprise further optimization steps relating to the setting the number of elements, initial guesses, scaling factors, solver options, and other known settings during optimization.

In a next step, the optimization process is executed for the implementation model. The resultant optimized parameters are then used to parametrize the implementation model. This model is then saved in the vehicle dynamic library **30.**

The method further comprises validating each optimized implementation model **22a-e** for each operational design domain **24a-e**. The validation process is preferably a dynamic model validation process. The validation process can be made by comparing the percentage fit of the model compared to reference trajectories. In one example, the first reference trajectories **111a** are used to get a validity level of the implementation model. In an alternative example, the second reference trajectories **111b** are used to get a validity level. However, it should be noted that different validation processes could be used, for example using other validation methods, statistical methods and/or using machine learning approaches.

Each optimized implementation model for a specific operational design domain will be arranged with a validity level. The higher the validity level, the more accurate the model is in reference to the abstract model **20.**

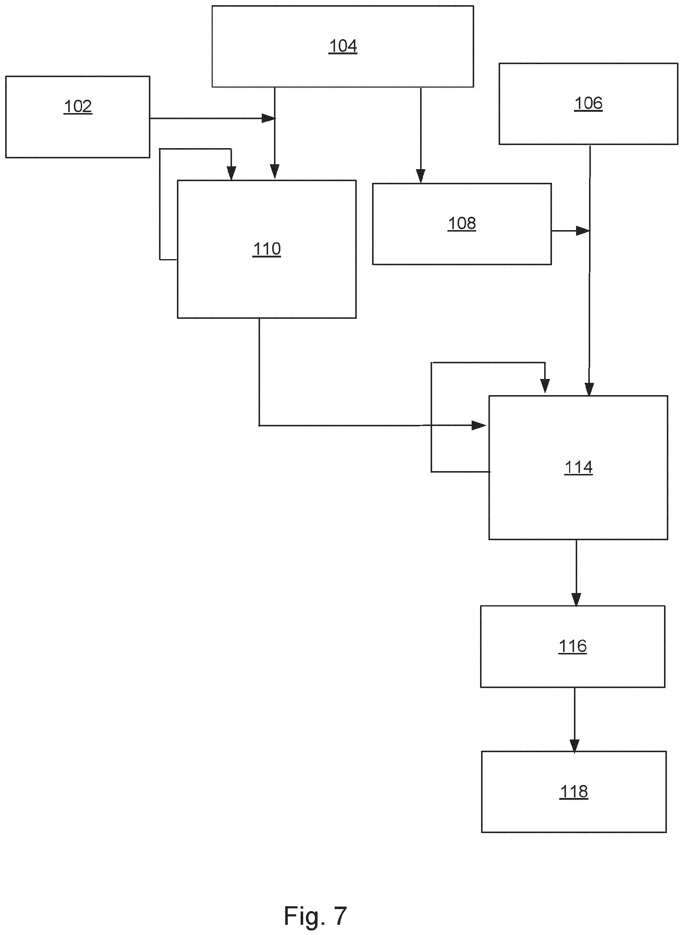

**FIG.** 7 is another view of **FIG. 6****,** according to another example. A computer-implemented method of deriving a vehicle dynamic library **30** of at least two vehicle dynamic implementation models **22a-e,** wherein each vehicle dynamic implementation model **22a-e** is correlated to different operational design domains **24a-e.** The method comprises defining **102** at least two operational design domains **24a-e,** choosing **104** an abstract model **20,** and choosing **106** an implementation model **24** to be optimized. The method further comprises parameterizing **108** the implementation model **24** by using at least one geometric parameter **G** from the abstract model **20,** and simulating **110** the abstract model **20** for each operational design domain **24a-e,** wherein the simulation generates reference trajectories. The method further comprises optimizing **114** the implementation model **22** for each operational design domain **24a-e** so as to create at least two optimized implementation models **22a-e,** wherein each optimization is based on said generated reference trajectories. The method further comprises validating **116** each optimized implementation model **22a-e** to achieve a validation level for each optimized implementation model **22a-e,** and saving **118** each optimized implementation model **22a-e** together with its validation level.

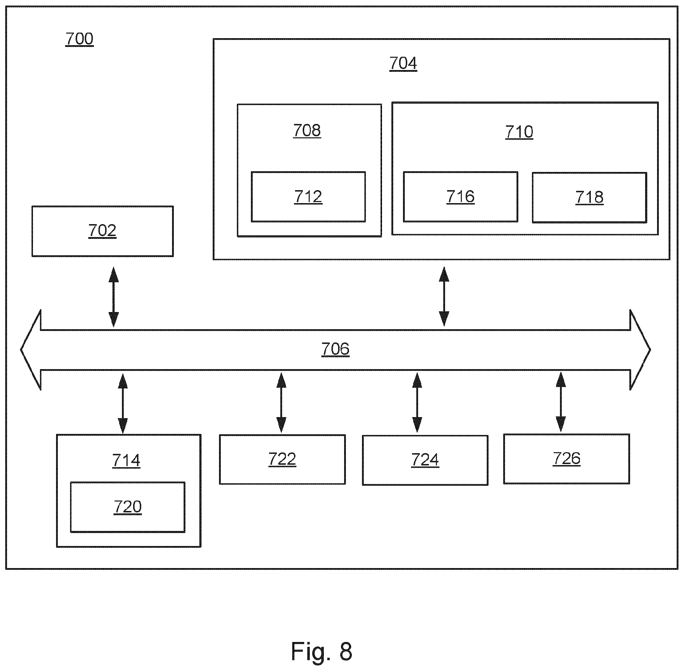

**FIG. 8** is a schematic diagram of a computer system **700** for implementing examples disclosed herein. The computer system **700** is adapted to execute instructions from a computer-readable medium to perform these and/or any of the functions or processing described herein. The computer system **700** may be connected (e.g., networked) to other machines in a LAN, an intranet, an extranet, or the Internet. While only a single device is illustrated, the computer system **700** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **700** may comprise at least one computing device or electronic device capable of including firmware, hardware, and/or executing software instructions to implement the functionality described herein. The computer system **700** may include a processor device **702** (may also be referred to as a control unit), a memory **704,** and a system bus **706.** The computer system **700** may include at least one computing device having the processor device **702.** The system bus **706** provides an interface for system components including, but not limited to, the memory **704** and the processor device **702.** The processor device 702 may include any number of hardware components for conducting data or signal processing or for executing computer code stored in memory **704.** The processor device **702** (e.g., control unit) may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processor device may further include computer executable code that controls operation of the programmable device.

The system bus **706** may be any of several types of bus structures that may further interconnect to a memory bus (with or without a memory controller), a peripheral bus, and/or a local bus using any of a variety of bus architectures. The memory **704** may be one or more devices for storing data and/or computer code for completing or facilitating methods described herein. The memory **704** may include database components, object code components, script components, or other types of information structure for supporting the various activities herein. Any distributed or local memory device may be utilized with the systems and methods of this description. The memory **704** may be communicably connected to the processor device **702** (e.g., via a circuit or any other wired, wireless, or network connection) and may include computer code for executing one or more processes described herein. The memory **704** may include non-volatile memory **708** (e.g., read-only memory (ROM), erasable programmable read-only memory (EPROM), electrically erasable programmable read-only memory (EEPROM), etc.), and volatile memory **710** (e.g., random-access memory (RAM)), or any other medium which can be used to carry or store desired program code in the form of machine-executable instructions or data structures and which can be accessed by a computer or other machine with a processor device **702.** A basic input/output system (BIOS) **712** may be stored in the non-volatile memory **708** and can include the basic routines that help to transfer information between elements within the computer system **700.**

The computer system **700** may further include or be coupled to a non-transitory computer-readable storage medium such as the storage device **714,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **714** and other drives associated with computer-readable media and computer-usable media may provide non-volatile storage of data, data structures, computer-executable instructions, and the like.

A number of modules can be implemented as software and/or hard-coded in circuitry to implement the functionality described herein in whole or in part. The modules may be stored in the storage device **714** and/or in the volatile memory **710,** which may include an operating system **716** and/or one or more program modules **718.** All or a portion of the examples disclosed herein may be implemented as a computer program product **720** stored on a transitory or non-transitory computer-usable or computer-readable storage medium (e.g., single medium or multiple media), such as the storage device **714,** which includes complex programming instructions (e.g., complex computer-readable program code) to cause the processor device **702** to carry out the steps described herein. Thus, the computer-readable program code can comprise software instructions for implementing the functionality of the examples described herein when executed by the processor device **702.** The processor device **702** may serve as a controller or control system for the computer system **700** that is to implement the functionality described herein.

The computer system **700** also may include an input device interface **722** (e.g., input device interface and/or output device interface). The input device interface **722** may be configured to receive input and selections to be communicated to the computer system **700** when executing instructions, such as from a keyboard, mouse, touch-sensitive surface, etc. Such input devices may be connected to the processor device **702** through the input device interface **722** coupled to the system bus **706** but can be connected through other interfaces such as a parallel port, an Institute of Electrical and Electronic Engineers (IEEE) 1394 serial port, a Universal Serial Bus (USB) port, an IR interface, and the like. The computer system **700** may include an output device interface **724** configured to forward output, such as to a display, a video display unit (e.g., a liquid crystal display (LCD) or a cathode ray tube (CRT)). The computer system **700** may also include a communications interface **726** suitable for communicating with a network as appropriate or desired.

The operational steps described in any of the exemplary aspects herein are described to provide examples and discussion. The steps may be performed by hardware components, may be embodied in machine-executable instructions to cause a processor to perform the steps, or may be performed by a combination of hardware and software. Although a specific order of method steps may be shown or described, the order of the steps may differ. In addition, two or more steps may be performed concurrently or with partial concurrence.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, steps, operations, elements, and/or components, but do not preclude the presence or addition of one or more other features, integers, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the inventive concepts being set forth in the following claims.

## Claims

1. A computer-implemented method of deriving a vehicle dynamic library (30) comprising at least two optimized vehicle dynamic implementation models (22a-e), wherein each optimized vehicle dynamic implementation model (22a-e) is correlated to different operational design domains (24a-e), the method comprising:
defining (102) at least two operational design domains (24a-e);
choosing (104) one vehicle dynamic abstract model (20);
choosing (106) one vehicle dynamic implementation model (24) to be optimized;
parameterizing (108) the implementation model (24) by using at least one geometric parameter (G) from the vehicle dynamic abstract model (20);
simulating (110) the vehicle dynamic abstract model (20) for each operational design domain (24a-e), wherein the simulation generates reference trajectories (111a, 111b);
optimizing (114) the vehicle dynamic implementation model (22) for each operational design domain (24a-e) so as to create at least two optimized vehicle dynamic implementation models (22a-e), wherein each optimization is based on at least one of said generated reference trajectories (111a, 111b);
validating (116) each optimized vehicle dynamic implementation model (22a-e) to achieve a validation level for each optimized vehicle dynamic implementation model (22a-e); and
saving (118) each optimized vehicle dynamic model (22a-e) together with its validation level.

2. The method according to claim 1, wherein the at least two operational design domains (22a-e) are related to different use cases of the vehicle (1).

3. The method according to claim 1 or 2, wherein the at least two operational design domains (22a-e) are related to any one of: vehicle speed levels, steering angles, environmental parameters, weight of the vehicle and/or a combination of one or more.

4. The method according to any proceeding claims, wherein the simulation is performed with different values of at least one input variable (V).

5. The method according claim 4, wherein the at least one input variable (V) is related to a steering angle of the vehicle (1), the speed of the vehicle (1), vertical road displacement and/or vertical forces on the tire of the vehicle (1).

6. The method according to any proceeding claims, wherein the at least one geometric parameter (G) relates to one or more of; wheel-bases, track widths, body mass of one or more parts of the vehicle (1), inertia of one or more parts of the vehicle (1), centre of gravity of one or more parts of the vehicle (1) and coupling positions of the vehicle (1).

7. The method according to any proceeding claims, wherein the validation is a dynamic model validation process.

8. The method according to any proceeding claims, wherein the validation is performed by using at least one of said generated reference trajectories (111a, 111b).

9. The method according to any proceeding claims, wherein the optimization further is based on defining an objective function that is at least based on the reference trajectories (111a, 111b).

10. The method according to claim 10, wherein the objective function further is based on implementation model trajectories (107) originating from the implementation model.

11. The method according to any proceeding claims, wherein the optimization is gradient based.

12. A computer system comprising a processor device configured to perform the method of any of claims 1 - 11.

13. A computer program product comprising program code for performing, when executed by the processor device, the method of any of claims 1 - 11.

14. A control system comprising one or more control units configured to perform the method according to any of claims 1 - 11.

15. A non-transitory computer-readable storage medium comprising instructions, which when executed by the processor device, cause the processor device to perform the method of any of claims 1 - 11.
